# EUROPÄISCHE PATENTSCHRIFT

(11) **EP 0 693 621 B1**
(45) Veröffentlichungstag und Bekanntmachung des Hinweises auf die Patenterteilung: **16.04.1997**
(21) Anmeldenummer: 95109664.3
(22) Anmeldetag: 22.06.1995
(51) Int. Cl.: F02M 25/07, F01N 3/02

(54) **Einrichtung zur Rückführung von gekühltem Abgas**
Cooled exhaust gas recirculation device
Dispositif de gaz d'échappement refroidi

(30) Priorität: 30.06.1994 DE 4422966
(43) Veröffentlichungstag der Anmeldung: 24.01.1996
(73) Patentinhaber: MTU Motoren- und Turbinen-Union Friedrichshafen GmbH, 88045 Friedrichshafen (DE)
(72) Erfinder: Bächle, Bernhard, Dipl.-Ing., D-88045 Friedrichshafen (DE); Freitag, Martin, Dr.-Ing., D-88048 Friedrichshafen (DE); Teetz, Christoph, Dr.-Ing., D-88048 Friedrichshafen (DE)

(56) Entgegenhaltungen:
- EP-A- 0 463 361
- DE-A- 4 007 516
- DE-A- 4 215 046
- GB-A- 1 438 764
- US-A- 1 766 675
- US-A- 4 249 382

## Beschreibung

Es ist bekannt, daß durch Abgasrückführung die Schadstoffemission insbesondere von Stickoxiden im Abgas von Brennkraftmaschinen günstig beeinflußt werden kann. Wegen der thermischen Belastung von Brennkraftmaschinen ist bei Vollast eine Kühlung der rückgeführten Abgase erforderlich. Die durch Kühlung der Abgase bewirkte niedrigere Ausgangstemperatur führt zu einer weiteren Verringerung der Stickoxidmenge im Abgas. Eine derartige Einrichtung zur Abgasrückführung mit Abgaskühler ergibt sich beispielsweise aus der DE 40 07 516 A1 als bekannt. Der in einer Abgasrückführleitung angeordnete Abgaskühler wird von in einem Oxidationskatalysator und in einem diesem nachgeordneten Partikelfilter gereinigtem Abgas durchströmt. Da eine vollständige Abgasreinigung nicht möglich ist, ist dennoch eine Ablagerung von Ruß und anderen Verbrennungsprodukten auf den Wärmeaustauschflächen des Abgaskühlers auf die Dauer nicht zu vermeiden, so daß der Abgaskühler mit der Zeit unwirksam wird und zu reinigen ist.

Aus der DE 40 20 357 A1 ist eine Abgasanlage mit einer Mischeinrichtung zur Zumischung von kühler Umgebungsluft zu den heißen, in einer Abgasleitung strömenden Abgasen bekannt. Auf diese Weise erfolgt eine Kühlung des Abgasstroms und es werden Schäden durch Überhitzung von Komponenten der Abgasanlage vermieden.

In der DE 42 15 046 A1 ist ein Auspuffrohr für eine Dieselbrennkraftmaschine aufgezeigt, dessen Wand mit Löchern versehen ist, über die Luft in das Auspuffrohr eingeblasen wird. Die eingeblasene Luft bildet einen Schleier, der verhindern soll, daß sich im Abgasstrom enthaltene Rußpartikel an den Wandungen des Auspuffrohrs anlagern.

Aus der nicht vorveröffentlichten deutschen Patentanmeldung mit dem Aktenzeichen P 44 14 830.5 geht es bereits als bekannt hervor, das zur Abgasrückführung vorgesehene Abgas durch Zumischung von Kühlluft zu kühlen. Die vom Abgasstrom in die Abgasrückführleitung eingesaugte Kühlluft führt lediglich zu einer Verdünnung des Abgases, wobei der Wärmeinhalt erhalten bleibt.

Bei einer Brennkraftmaschine mit Abgasrückführung nach der US-A-1,766,675, die als nächstliegender Stand der Technik angesehen wird, wird dem die Zylinder einer Brennkraftmaschine verlassenden Abgastrom Umgebungsluft zugesetzt, um eine Kühlung des Abgases zu bewirken. Die zugesetzte Umgebungsluft vermischt sich mit dem Abgasstrom in einem Rohr, das somit als Misch- und Kühleinrichtung dient. Ein Teil des in diesem Rohr strömenden Gasgemisches wird mittels eines in der Gasströmung liegenden Entnahmestutzens entnommen, der mit einer Abgasrückführleitung verbunden ist. Mit der dargestellten Einrichtung wird mit Luft verdünntes Abgas für die Abgasrückführung bereitgestellt.

Der im Patentanspruch 1 angegebenen Erfindung liegt das Problem zugrunde, eine ausreichende Menge von gekühltem Abgas für die Abgasrückführung zur Verfügung zu stellen, wobei der zur Abgaskühlung benutzte Abgaskühler dauerhaft von Verschmutzung freibleibt.

Dieses Problem wird durch die im Patentanspruch 1 aufgeführten Merkmale gelöst. Der im Zusammenhang mit der Abgasrückführung benutzte Abgaskühler besitzt keine Wärmeaustauschflächen, an denen sich Schmutz anlagern könnte, weil die als Kühlmedium benutzte Kühlluft und der zu kühlende Abgasstrom ohne zwischengeschaltete Wände direkt miteinander in Berührung stehen. Die Kühlung des Abgases erfolgt durch Wärmeleitung. Im Gegensatz zu bekannten Abgaskühlern erfolgt keine Vermischung der Kühlluft mit dem Abgas. Vielmehr wird das Abgas in einem oder mehreren gebündelten Strahlen durch einen rohrförmigen Abgaskühler hindurchgeführt, in dem laminare Strömungsverhältnisse herrschen. Laminare Strömungsverhältnisse werden dadurch erreicht, daß Kühlluft und Abgas in gleicher Richtung und mit gleicher Geschwindigkeit strömen. Nach einer gewissen Kühlstrecke kann mit einem Entnahmestutzen Abgas aus den gekühlten gebündelten Strahlen entnommen werden und über die Abgasrückführleitung der Ansaugluft zugemischt werden.

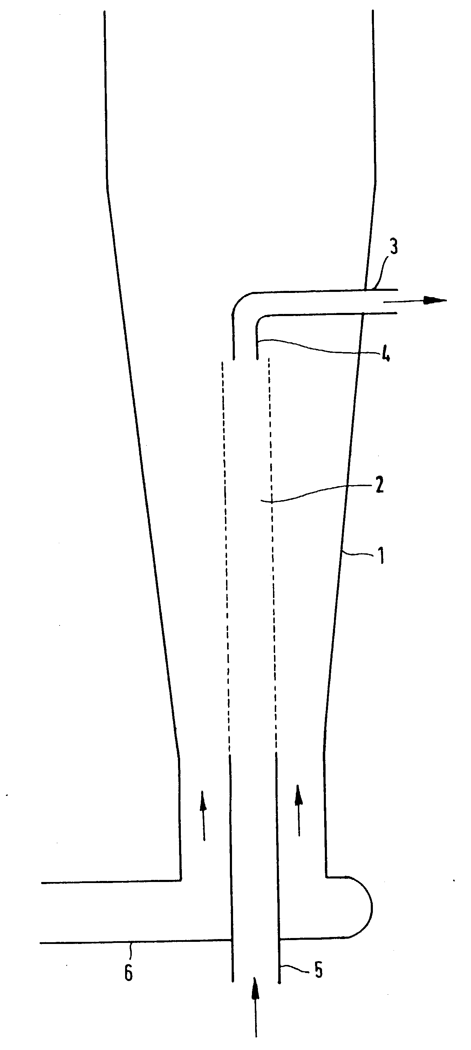

Ein Ausführungsbeispiel der Erfindung ist in der Zeichnung dargestellt und wird im folgenden näher beschrieben. Es zeigt die einzige Figur eine schematische Darstellung des bei der Abgasrückführung benutzten Abgaskühlers.

Das aus den Zylindern einer nicht dargestellten Brennkraftmaschine ausgestoßene Abgas tritt aus einer Abgasleitung 5 in ein als Abgaskühler dienendes Kühlrohr 1 ein. Die Abgasströmung durch das Kühlrohr 1 ist durch Pfeile angedeutet. Aufgrund im Kühlrohr herrschender laminarer Strömungsverhältnisse durchläuft das Abgas das Kühlrohr 1 in einem gebündelten Strahl 2, dessen Außendurchmesser durch gestrichelte Linien angedeutet ist. Laminare Strömungsverhältnisse werden dadurch erreicht, daß parallel zum Abgasstrom im Kühlrohr 1 Kühlluft geführt ist, die den gebündelten Strahl 2 wie ein Mantel umgibt, und mit gleicher Richtung und ungefähr gleicher Geschwindigkeit wie der Abgasstrom strömt. Die Strömungsrichtung der Kühlluft ist durch Pfeile neben der Abgasleitung 5 dargestellt. Die Kühlluft wird über einen Luftzufuhrstutzen 6 durch den Abgasstrom eingesaugt. Wenn die erforderliche Strömungsgeschwindigkeit für laminare Strömungsverhältnisse durch einfaches Ansaugen nicht erreicht wird, erfolgt die Zuführung der Kühlluft in das Kühlrohr 1 durch ein (nicht dargestelltes) Gebläse. Die Kühlluft kann beispielsweise auch aus der Ladeluft der Brennkraftmaschine nach Verdichter und Ladeluftkühler (nicht dargestellt) entnommen werden. Abgas und Kühlluft stehen in unmittelbarer Berührung. Die Kühlung des Abgases erfolgt durch Wärmeleitung. Da aufgrund der laminaren Strömungsverhältnisse das Abgas in gebündeltem Strahl zusammenbleibt, kann nach einer gewissen Kühlstrecke in einfacher Weise mittels eines Entnahmestutzens 4, dessen Eintrittsöffnung im gekühlten Abgasstrom liegt, konzentriertes Abgas entnommen werden und über die Abgasrückführleitung 3 der Ansaugluft der Brennkraftmaschine zugemischt werden. Die erwärmte Kühlluft wird zusammen mit nicht rückgeführtem Abgas in die Umgebung ausgepufft.

Zur Steigerung der Effektivität der Abgaskühlung kann der Abgasstrom in mehrere laminare Teilstrahlen aufgeteilt sein.

Das Kühlrohr 1 ist zweckmäßigerweise als sich diffusorartig erweiterndes Rohr ausgebildet. Mit zunehmender Kühlstrecke verringert sich die Geschwindigkeit des Abgasstroms aufgrund der Abkühlung. Die diffusorartige Erweiterung dient dazu, eine entsprechende Verringerung der Strömungsgeschwindigkeit der Kühlluft herbeizuführen. Der Erweiterungswinkel ist entsprechend den Strömungsverhältnissen einzustellen.

Weiter ist es zweckmäßig, das Kühlrohr 1 in der Vertikalen, d. h. in Richtung des Vektors der Erdbeschleunigung anzuordnen. Aufgrund des Temperaturunterschieds zwischen dem heißen Abgas und der Kühlluft hat das Abgas durch konvektive Vorgänge die Tendenz vertikal nach oben zu steigen. Für laminare Strömungsausbildung ohne Vermischungserscheinungen ist es dementsprechend zweckmäßig, wenn die Strömungsrichtung vertikal nach oben vorgesehen ist.

## Patentansprüche

1. Einrichtung zur Rückführung von gekühltem Abgas bei einer Brennkraftmaschine, mit einer Abgasrückführleitung (3) und einem Abgaskühler, wobei das zu kühlende Abgas und als Kühlmedium dienende Kühlluft in direkter Berührung ein als Abgaskühler dienendes Kühlrohr (1) durchströmen, wobei ferner ein mit der Abgasrückführleitung (3) verbundener Entnahmestutzen (4) vorgesehen ist, dadurch gekennzeichnet, daß Abgas und Kühlluft mit gleicher Geschwindigkeit und in gleicher Richtung unter laminaren Strömungsverhältnissen strömen, wobei das Abgas in einem oder mehreren gebündelten Strahlen vorliegt, und daß die Eintrittsöffnung des Entnahmestutzens (4) im von den gebündelten Strahlen gebildeten gekühlten Abgasstrom innerhalb des Kühlrohrs (1) liegt.

2. Einrichtung nach Anspruch 1, dadurch gekennzeichnet, daß der über eine Abgasleitung (5) in das Kühlrohr (1) eintretende Abgasstrom über einen Luftansaugstutzen (6) Kühlluft in das Kühlrohr (1) einsaugt.

3. Einrichtung nach Anspruch 1, dadurch gekennzeichnet, daß die Zuführung von Kühlluft in das Kühlrohr (1) durch ein Gebläse erfolgt.

4. Einrichtung nach Anspruch 1, dadurch gekennzeichnet, daß die Kühlluft aus der Ladeluft der Brennkraftmaschine entnommen wird.

5. Einrichtung nach einem der Ansprüche 1 bis 4, dadurch gekennzeichnet, daß das Kühlrohr (1) sich in Strömungsrichtung diffusorartig erweiternd ausgebildet ist.

6. Einrichtung nach einem der Ansprüche 1 bis 5, dadurch gekennzeichnet, daß das Kühlrohr (1) sich in der Vertikalen erstreckt und Abgas und Kühlluft im Kühlrohr (1) vertikal nach oben strömen.

## Claims

1. Device for the recycling of cooled exhaust gas in an internal combustion engine, with an exhaust-gas recycling conduit (3) and with an exhaust-gas cooler, the exhaust gas to be cooled and cooling air serving as a cooling medium flowing in direct contact through a cooling tube (1) serving as an exhaust-gas cooler, furthermore an extraction port (4) connected to the exhaust-gas recycling conduit (3) being provided, characterized in that the exhaust gas and cooling air flow at the same velocity and in the same direction under laminar flow conditions, the exhaust gas being present in one or more directional jets, and in that the inlet orifice of the extraction port (4) is located within the cooling tube (1) in the cooled exhaust-gas stream formed by the directional jets.

2. Device according to Claim 1, characterized in that the exhaust-gas stream entering the cooling tube (1) via an exhaust-gas conduit (5) sucks cooling air into the cooling tube (1) via an air intake port (6).

3. Device according to Claim 1, characterized in that cooling air is fed into the cooling tube (1) by means of a blower.

4. Device according to Claim 1, characterized in that the cooling air is extracted from the charge air of the internal combustion engine.

5. Device according to one of Claims 1 to 4, characterized in that the cooling tube (1) is designed so as to widen in a diffuser-like manner in the direction of flow.

6. Device according to one of Claims 1 to 5, characterized in that the cooling tube (1) extends vertically and exhaust gas and cooling air flow vertically upwards in the cooling tube (1).

## Revendications

1. Dispositif de recyclage de gaz d'échappement refroidi dans un moteur à combustion interne, avec une conduite de recyclage de gaz d'échappement (3) et un refroidisseur de gaz d'échappement, dans lequel le gaz d'échappement à refroidir et l'air de refroidissement servant d'agent de refroidissement parcourent en contact direct un tube de refroidissement (1) servant de refroidisseur de gaz d'échappement, dans lequel il est en outre prévu un tube de prélèvement (4) raccordé à la conduite de recyclage de gaz d'échappement (3), caractérisé en ce que le gaz d'échappement et l'air de refroidissement circulent avec la même vitesse et dans le même sens dans des conditions d'écoulement laminaire, le gaz d'échappement se trouvant sous la forme d'un ou de plusieurs jets réunis en faisceau, et en ce que l'orifice d'entrée du tube de prélèvement (4) se trouve dans le courant de gaz d'échappement refroidi formé par les jets réunis en faisceau à l'intérieur du tube de refroidissement (1).

2. Dispositif suivant la revendication 1, caractérisé en ce que le courant de gaz d'échappement entrant dans le tube de refroidissement (1) par une conduite de gaz d'échappement (5) aspire l'air de refroidissement dans le tube de refroidissement (1) par un tube d'aspiration d'air (6).

3. Dispositif suivant la revendication 1, caractérisé en ce que l'alimentation de l'air de refroidissement dans le tube de refroidissement (1) est assurée par une soufflante.

4. Dispositif suivant la revendication 1, caractérisé en ce que l'air de refroidissement est prélevé hors de l'air d'admission du moteur à combustion interne.

5. Dispositif suivant l'une quelconque des revendications 1 à 4, caractérisé en ce que le tube de refroidissement (1) s'évase à la manière d'un diffuseur dans le sens de l'écoulement.

6. Dispositif suivant l'une quelconque des revendications 1 à 5, caractérisé en ce que le tube de refroidissement (1) s'étend à la verticale et le gaz d'échappement et l'air de refroidissement circulent verticalement de bas en haut dans le tube de refroidissement (1).
